(19) **Europäisches Patentamt**
**European Patent Office**
**Office européen des brevets**

(11) **EP 4 672 002 A1**

(12) **EUROPEAN PATENT APPLICATION**

(43) Date of publication:
**31.12.2025 Bulletin 2026/01**

(21) Application number: **25167904.9**

(22) Date of filing: **02.04.2025**

(51) International Patent Classification (IPC):
***G06F 12/0868*** (2016.01)   ***G06F 12/0871*** (2016.01)
***G06F 12/0873*** (2016.01)

(52) Cooperative Patent Classification (CPC):
**G06F 12/0868; G06F 12/0871; G06F 12/0873;**
G06F 2212/1016; Y02D 10/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024 CN 202410851892**

(71) Applicant: **Beijing Volcano Engine Technology Co., Ltd.**
**Beijing 100190 (CN)**

(72) Inventors:
• **QU, Xiongjun**
  **Chaoyang District, Beijing 100028 (CN)**
• **YANG, Tao**
  **Chaoyang District, Beijing 100028 (CN)**
• **LIU, Chenming**
  **Chaoyang District, Beijing 100028 (CN)**
• **HU, Zhenguo**
  **Chaoyang District, Beijing 100028 (CN)**

(74) Representative: **Marks & Clerk LLP**
**15 Fetter Lane**
**London EC4A 1BW (GB)**

(54) **CLOUD STORAGE RESOURCE SCHEDULING METHOD AND APPARATUS, ELECTRONIC DEVICE, AND STORAGE MEDIUM**

(57)      Embodiments of the present disclosure provide a cloud storage resource scheduling method and apparatus, an electronic device, and a storage medium. The method includes: obtaining (S101) time-series statistical data of a storage system, which is used for representing a change over time of a plurality of resource states of a storage cluster in the storage system; determining (S102), based on the time-series statistical data, whether resource scheduling needs to be triggered; in response to determining resource scheduling needs to be triggered, generating (S103) a resource scheduling topological graph, and selecting, from the storage cluster, candidate storage volume sets, based on the resource scheduling topological graph and the time-series statistical data; generating (S104) a resource scheduling plan based on a resource situation of each candidate storage volume, and controlling (S105) a performing of a scheduling task for a related storage volume based on the resource scheduling plan.

**FIG. 1**

EP 4 672 002 A1

## Description

## FIELD

Embodiments of the present disclosure relate to the technical field of cloud computing, and in particular, to a cloud storage resource scheduling method and apparatus, an electronic device, and a storage medium.

## BACKGROUND

With the development and popularization of a cloud computing technology, related Internet services based on cloud computing have been applied more and more widely. For example, through a cloud storage technology, data is stored in data centers all over the country to provide corresponding services for users in corresponding regions, which greatly enhances the user experience of using the Internet services.

At present, data on a cloud is usually managed on a unit of a storage cluster composed of a plurality of servers. After receiving a data request of a user, a data center may allocate the data to a corresponding storage cluster for processing, to complete a process of responding to the data request.

However, in the technical solution of prior art, there is a problem of non-uniform resource allocation of the storage clusters, which affects a speed of responding to a data request and a speed of data transmission.

## SUMMARY

Embodiments of the present disclosure provide a storage resource scheduling method and apparatus, an electronic device, and a storage medium, to solve the problem that a speed of responding to a data request and a speed of data transmission are affected.

In a first aspect, the embodiments of the present disclosure provide a cloud storage resource scheduling method, including: obtaining time-series statistical data of a storage system, the time-series statistical data being used for representing a change over time of a plurality of resource states of a storage cluster in the storage system; determining, based on the time-series statistical data, whether resource scheduling needs to be triggered; in response to determining that resource scheduling needs to be triggered, generating a resource scheduling topological graph for the storage system, and selecting, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system; generating a resource scheduling plan based on a resource situation of each candidate storage volume in the candidate storage volume set, the resource scheduling plan being used for indicating a storage volume relationship among a plurality of storage clusters participating in scheduling; and controlling a performing of a scheduling task for a related storage volume based on the resource scheduling plan.

In a second aspect, the embodiments of the present disclosure provide a cloud storage resource scheduling apparatus, including: an obtaining module configured to obtain time-series statistical data of a storage system, the time-series statistical data being used for representing a change over time of a plurality of resource states of a storage cluster in the storage system; a determining module configured to determine, based on the time-series statistical data, whether resource scheduling needs to be triggered; a filtering module configured to, in response to determining that resource scheduling needs to be triggered, generating a resource scheduling topological graph for the storage system, and selecting, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system; a generation module configured to generate a resource scheduling plan based on a resource situation of each candidate storage volume in the candidate storage volume set, the resource scheduling plan being used for indicating a storage volume relationship among a plurality of storage clusters participating in scheduling; and a scheduling module configured to control a performing of a scheduling task for a related storage volume based on the resource scheduling plan.

In a third aspect, the embodiments of the present disclosure provide an electronic device, including: a processor and a memory. The memory stores computer-executable instructions; and the processor is configured to execute the computer-executable instructions stored in the memory to cause the at least one processor to perform the cloud storage resource scheduling method in the first aspect and in various possible designs of the first aspect.

In a fourth aspect, the embodiments of the present disclosure provide a computer-readable storage medium. The computer-readable storage medium stores computer-executable instructions which, when executed by a processor, implement the cloud storage resource scheduling method in the first aspect and in various possible designs of the first aspect.

In a fifth aspect, the embodiments of the present disclosure provides a computer program product, including computer programs which, when run by a processor, implement the cloud storage resource scheduling method in the first aspect and in various possible designs of the first aspect.

According to the cloud storage resource scheduling method and apparatus, the electronic device, and the storage medium provided in this embodiment, the method includes: obtaining time-series statistical data of a storage system, the time-series statistical data being used for representing a change over time of a plurality of resource states of a storage cluster in the storage system; determining, based on the time-series statistical data, whether resource scheduling needs to be triggered; in response to determining that resource scheduling needs to be triggered, generating a resource scheduling topological graph for the storage system, and selecting, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system; generating a resource scheduling plan based on a resource situation of each candidate storage volume in the candidate storage volume set, the resource scheduling plan being used for indicating a storage volume relationship among a plurality of storage clusters participating in scheduling; and controlling a performing of a scheduling task for a related storage volume based on the resource scheduling plan. The corresponding resource scheduling plan is generated and executed through the time-series statistical data that represents the change of the resource states of the storage cluster, to realize resource load balancing among the storage clusters in multiple dimensions, and thus the problem of non-uniform resource allocation caused by scheduling resource load in a single dimension is avoided, and a speed of responding to a data request and a speed of data transmission of the storage system are increased.

## BRIEF DESCRIPTION OF THE DRAWINGS

To describe the technical solutions in the embodiments of the present disclosure or in the prior art more clearly, the following briefly introduces the accompanying drawings for describing the embodiments or the prior art. Apparently, the accompanying drawings in the following description show merely some embodiments of the present disclosure, and a person of ordinary skill in the art may still derive other drawings from the accompanying drawings without creative efforts.

FIG. 1 is a diagram of an application scenario of a cloud storage resource scheduling method according to an embodiment of the present disclosure;
FIG. 2 is a flowchart I of a cloud storage resource scheduling method according to an embodiment of the present disclosure;
FIG. 3 is a flowchart of a specific implementation of step S102 in an embodiment shown in FIG. 2;
FIG. 4 is a flowchart of a specific implementation of step S1022 in an embodiment shown in FIG. 3;

FIG. 5 is a flowchart of a specific implementation of step S103 in an embodiment shown in FIG. 2;
FIG. 6 is a flowchart of a specific implementation of step S104 in an embodiment shown in FIG. 2;
FIG. 7 is an architecture diagram of a scheduling system according to an embodiment of the present disclosure;
FIG. 8 is a flowchart II of a cloud storage resource scheduling method according to an embodiment of the present disclosure;
FIG. 9 is a flowchart of a specific implementation of step S202 in an embodiment shown in FIG. 2;
FIG. 10 is a flowchart of a specific implementation of step S2021 in an embodiment shown in FIG. 8;
FIG. 11 is a structural block diagram of a cloud storage resource scheduling apparatus according to an embodiment of the present disclosure;
FIG. 12 is a schematic structural diagram of an electronic device according to the embodiments of the present disclosure; and
FIG. 13 is a schematic structural diagram of hardware of an electronic device according to an embodiment of the present disclosure.

## DETAILED DESCRIPTION OF EMBODIMENTS

In order to make the objectives, technical solutions, and advantages of the embodiments of the present disclosure clearer, the technical solutions in the embodiments of the present disclosure are clearly described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

It should be noted that user information (including but not limited to user device information and user personal information) and data (including but not limited to data for analysis, stored data, displayed data, and the like) involved in the present disclosure are information and data which are authorized by the user or fully authorized by all parties. Furthermore, acquisition, use, and processing of relevant data all comply with relevant laws, regulations, and standards in relevant countries and districts, and corresponding operation entries are provided for the user for authorization or refuse selection.

Application scenarios of the embodiments of the present disclosure are explained below.

A cloud storage resource scheduling method according to the embodiments of the present disclosure can be applied to an application scenario with cloud data storage. An executive body of this embodiment can be a server for providing the above cloud data storage service or another electronic device having a similar function.

In some embodiments, the above server or electronic device can implement the cloud storage resource scheduling method according to the embodiments of the present disclosure by executing various computer-executable instructions or computer programs. For example, the computer-executable instructions can be program-level commands, machine instructions, or software instructions. The computer programs can be native programs or software modules in an operating system. They can be local application program which can be run only after they are installed in the operating system. In summary, the above computer-executable instructions can be any form of instruction, and the above computer programs can be any form of application program, module, or plugin. The specific implementation form can be configured as needed. Further, in some embodiments, the server can be an independent physical server, a server cluster or distributed system composed of a plurality of physical servers, or a cloud server that provides a basic cloud computing service such as a cloud service, a cloud storage, a cloud communication, a cloud database, a cloud computing, a cloud function, a network service, a middleware service, a domain name service, a security service, a Content Delivery Network (CDN), big data, ad an artificial intelligence platform. The cloud service can be an interactive processing service that can be called by a terminal device.

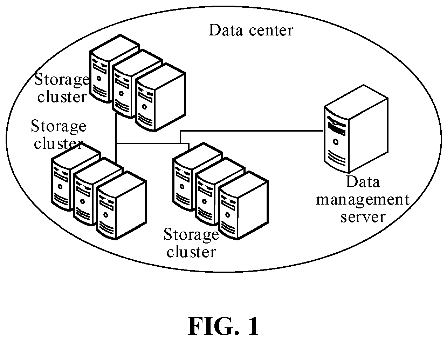

FIG. 1 is a diagram of an application scenario of a cloud storage resource scheduling method according to an embodiment of the present disclosure. Referring to FIG. 1, a data management server is taken as an example. In a data center, a large number of data servers are deployed to form a storage system to store data and providing a data access service to the outside. Meanwhile, one or more data management servers are further deployed. The data management server will serve as a scheduling platform to manage the above data servers. Specifically, for example, the above data servers are grouped based on a cluster granularity, and a plurality of storage clusters are created and managed. Storage resource requested by a user from a cloud will be allocated to a storage cluster in the data center, and the storage cluster will provide a storage volume for use by the user. A storage volume is an abstract logical unit that serves as a basic unit for a user to request for storage resource to provide service to the outside. The data management server can achieve scheduling and balancing of storage resource among different data clusters by creating, deleting, and scheduling storage volumes individually or in batches.

In the prior art, the storage resource among the data clusters are usually scheduled based on a single capacity dimension, which adjusts the storage volumes based on current available capacity in each data cluster, and the data (the storage volume) in a data cluster with low available capacity is scheduled to a data cluster with high available capacity, thereby achieving capacity load balancing. However, in practical applications, a speed of data read and write and a speed of responding to a request are not only affected by the capacities of the storage clusters, but also by other factor. In the solution of the prior art, the load balancing is only based on the capacity dimension, which leads to a problem of non-uniform resource allocation of the storage clusters, which affects a speed of responding to a data request and a speed of data transmission.

The embodiments of the present disclosure provide a cloud storage resource scheduling method to solve the above problem.

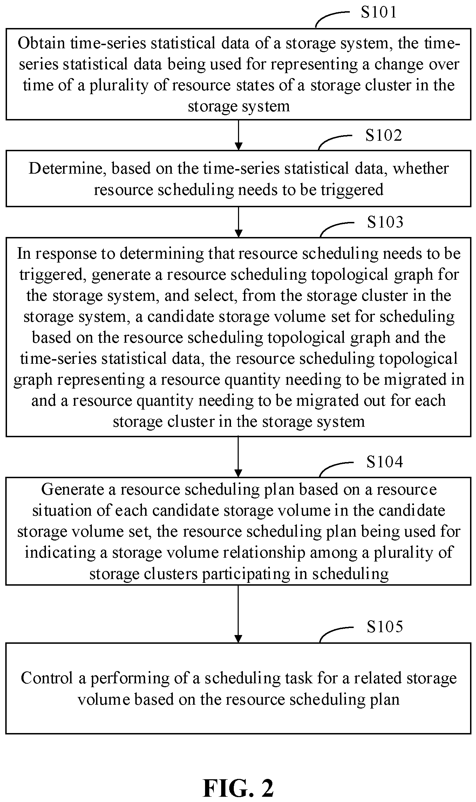

Referring to FIG. 2, FIG. 2 is a flowchart I of a cloud storage resource scheduling method according to an embodiment of the present disclosure. The method provided in this embodiment can be applied to a server, such as the data management server shown in FIG. 1. The cloud storage resource scheduling method includes the following steps.

At step S101, time-series statistical data of a storage system is obtained, and the time-series statistical data is used for representing a change over time of a plurality of resource states of a storage cluster in the storage system.

At step S102, whether resource scheduling needs to be triggered is determined based on the time-series statistical data.

At step S103, in response to determining that resource scheduling needs to be triggered, a resource scheduling topological graph is generated for the storage system, and a candidate storage volume set for scheduling is selected from the storage cluster in the storage system based on the resource scheduling topological graph and the time-series statistical data, and the resource scheduling topological graph represents a resource quantity needing to be migrated in and a resource quantity needing to be migrated out for each storage cluster in the storage system.

At step S104, a resource scheduling plan is generated based on a resource situation of each candidate storage volume in the candidate storage volume set, and the resource scheduling plan is used for indicating a storage volume relationship among a plurality of storage clusters participating in scheduling.

At step S105, a performing of a scheduling task for a related storage volume is controlled based on the resource scheduling plan.

Referring to the application scenario diagram shown in FIG. 1, in this embodiment, the cloud storage resource scheduling method provided is described using the data management server as an executive body. For example, the storage system is composed of a large number of data servers for storing specific cloud data. The storage system includes a plurality of storage clusters, each of which contains a plurality of data servers. Storage resource requested by a user from a cloud may be allocated to a storage cluster, and the storage cluster provides storage volumes for use by the user. The data management server is communicatively connected to the storage system and can complete management operations such as creation, deletion, and adjustment on the storage clusters by sending a control instruction to the storage system. The management operations include scheduling the storage volumes in the storage clusters to ensure load balancing among the storage clusters. In a possible implementation, the data management server can periodically schedule the storage volumes in the storage clusters, for example, an instruction for scheduling the storage volumes in the storage clusters is triggered every hour or day, and then the method provided in this embodiment is performed. Alternatively, the data management server may also trigger the instruction for scheduling the storage volumes in the storage clusters based on other determining logic. For example, the instruction for scheduling the storage volumes in the storage clusters is triggered after resource alarm information of at least one storage cluster has been randomly detected, and then the method provided in this embodiment is performed.

Specifically, for step S101, exemplarily, the data management server can periodically obtain the time-series statistical data of the storage system. The time-series statistical data is used for representing the change over time of the resource states of the storage cluster in the storage system. A resource state is an available storage resource quantity of a storage cluster, which can be represented by a specific available quantity value or percentage, for example. The change over time of the resource states indicates state values of the resource states at different historical times. The time-series statistical data can be pre-generated data stored in a time-series database, and acquisition and storage of the above time-series statistical data can be achieved by setting a resource monitoring unit in the storage system. The specific process will not be elaborated. Afterwards, the data management server obtains the time-series statistical data of the storage system by accessing the time-series database.

Further, the storage resource can include a storage capacity resource, and can further include a storage performance resource in addition to the storage capacity resource. In a possible implementation, the time-series statistical data includes first time-series statistical data and second time-series statistical data; the first time-series statistical data represents a storage capacity resource of the storage cluster and/or a storage volume within the storage cluster; and the second time-series statistical data represents a storage performance resource of the storage cluster and/or the storage volume within the storage cluster. More specifically, the first time-series statistical data includes at least one of a maximum assignable capacity and a historical capacity. The second time-series statistical data includes at least one of a bandwidth and an Input/Output per second (IOPS). In a specific embodiment, the time-series statistical data includes the following content:

(1) a storage cluster list and a maximum capacity/bandwidth/IOPS that can be allocated for each cluster;

(2) a storage volume list, a storage cluster it belongs to, a user it is affiliated to, and other information;

(3) a historical capacity/bandwidth/IOPS of each storage cluster; and

(4) a historical capacity/bandwidth/IOPS of each storage volume.

The storage cluster list is a list of cluster identifications of available storage clusters contained in the storage system (of one or more data centers). The storage volume list is a list of storage volume identifications provided to a user. The each piece of above content is time-series data, i.e., data at different historical time points.

In the steps of this embodiment, the obtained time-series statistical data includes not only the time-series data describing the storage capacity resource, but also the time-series data describing the storage performance resource, thereby obtaining monitoring data in a plurality of dimensions (i.e. a composite dimension), which lays a foundation for achieving resource load balancing in the composite dimension subsequently.

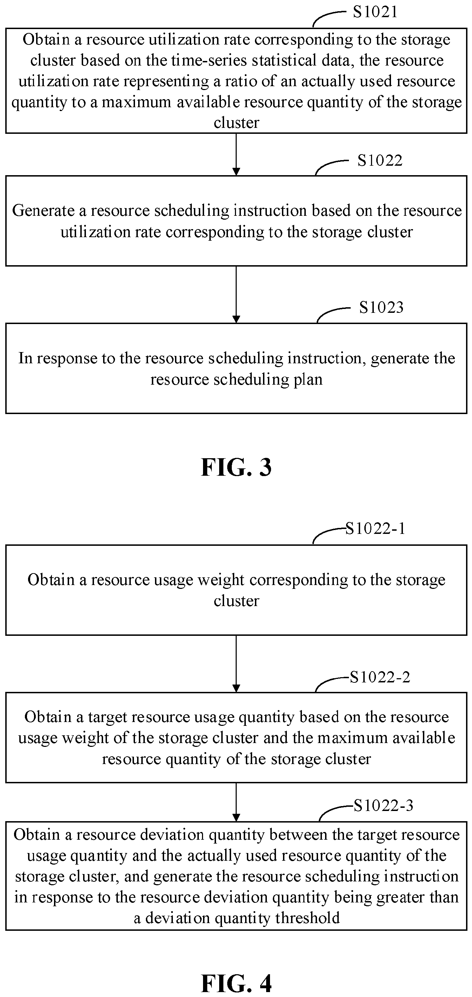

Exemplarily, after the time-series statistical data is obtained, whether resource scheduling needs to be triggered is determined based on the time-series statistical data. In response to the time-series statistical data indicating that the storage cluster is at a high load, the resource scheduling needs to be triggered. Specifically, in a possible implementation, as shown in FIG. 3, a specific implementation of step S102 includes the following steps.

At step S1021, a resource utilization rate corresponding to the storage cluster is obtained based on the time-series statistical data, and the resource utilization rate represents a ratio of an actually used resource quantity to a maximum available resource quantity of the storage cluster.

At step S1022, a resource scheduling instruction is generated based on the resource utilization rate corresponding to the storage cluster, and the resource scheduling instruction is used for triggering the resource scheduling.

Exemplarily, first, the resource utilization rate corresponding to the storage cluster recorded in the storage cluster list can be obtained based on the time-series statistical data. The resource utilization rate represents the ratio of the actually used resource quantity to the maximum available resource quantity of the storage cluster. Specifically, the time-series statistical data records the maximum available resource quantity and the actually used resource quantity at each historical time of each storage cluster. The resource utilization rate can be obtained based on the above maximum available resource quantity and the actually used resource quantity at current time (i.e. the latest historical time). It should be noted that based on the previous technology, the storage resource of a storage cluster can include capacity resource and performance resource. Correspondingly, the resource utilization rate corresponding to the storage cluster obtained in this embodiment includes a capacity resource utilization rate and a performance resource utilization rate which can be calculated separately, their specific calculation modes are similar, and each can be obtained through the data in the time-series statistical data, which will not be elaborated here. Afterwards, the resource scheduling instruction is generated based on the resource utilization rate corresponding to the storage cluster. For example, in response to the resource utilization rate (the capacity resource utilization rate and/or performance resource utilization rate) being greater than a utilization rate threshold, the resource scheduling instruction is generated, i.e., it determines that the resource scheduling needs to be triggered. Afterwards, the data management server executes, in response to the resource scheduling instruction, the step of generating the resource scheduling plan.

Further, in a possible implementation, as shown in FIG. 4, a specific implementation of step S1022 includes the following steps.

At step S1022-1, a resource usage weight corresponding to the storage cluster is obtained.

At step S1022-2, a target resource usage quantity is obtained based on the resource usage weight of the storage cluster and the maximum available resource quantity of the storage cluster.

At Step S1022-3, a resource deviation quantity between the target resource usage quantity and the actually used resource quantity of the storage cluster is obtained, and the resource scheduling instruction is generated in response to the resource deviation quantity being greater than a deviation quantity threshold.

Exemplarily, in the step of this embodiment, first, the resource usage weight corresponding to the storage cluster is first obtained. The resource usage weight can be pre-configured information stored in the data management server and used for representing a recommended usage weight of resource corresponding to the storage cluster. For example, the resource usage weight is 50%, which means that in a case that the usage rate of the storage resource corresponding to the storage cluster is 50%, an operating state is optimal. The resource usage weight can be a preset value, can be determined based on a value obtained by a user service model, and can be set as needed. Afterwards, the target resource usage quantity is obtained based on a product of the resource usage weight of the storage cluster and the maximum available resource quantity of the storage cluster. For example, in response to the resource usage weight of the storage cluster being 50% and the maximum available resource quantity is 1 TB, the target resource usage quantity is 512 GB. Afterwards, based on the target resource usage quantity of each storage cluster, deviation calculation (difference calculation) is performed on the corresponding actually used resource quantity to obtain the resource deviation quantity. A larger resource deviation quantity between the target resource usage quantity and the actually used resource quantity indicates that a load of the storage cluster is higher (or lower). In other words, there is a problem of an unbalanced resource load. In response to the resource deviation quantity exceeding the deviation quantity threshold, the resource scheduling instruction is generated. In response to the resource scheduling instruction, the resource scheduling plan is generated, and subsequent storage volume scheduling step is executed. In this embodiment, the target resource usage quantity of the storage cluster is determined through the resource usage weight and the maximum available resource quantity. Based on the deviation quantity between the target resource usage quantity and the actually used resource quantity of the storage cluster, the resource scheduling instruction is generated, to achieve the purpose of maintaining the storage resource quantity of the storage cluster around the target resource usage quantity, thereby improving the operation efficiency and performance of the storage cluster.

In this embodiment, before the resource scheduling plan is generated, the data management server first calculates the resource utilization rate corresponding to the storage cluster based on the time-series statistical data. After the resource utilization rate exceeds an annotation, the subsequent step of generating the resource scheduling plan is then executed, which achieves asynchronous execution of the two steps of monitoring the time-series statistical data and generating and executing the resource scheduling plan, thereby reducing the computing amount of the system. Meanwhile, since there is no need to synchronously generate the resource scheduling plan, the overhead of computing resource is reduced, the system can shorten a monitoring interval for the time-series statistical data and improve the overall instantaneity of resource scheduling.

Afterwards, in response to determining that resource scheduling needs to be triggered, a resource scheduling topological graph is generated for the storage system. The resource scheduling topological graph represents a resource quantity needing to be migrated in and a resource quantity needing to be migrated out for each storage cluster in the storage system. Afterwards, storage volumes in the storage cluster of the storage system are selected based on the resource scheduling topological graph and the time-series statistical data to obtain a candidate storage volume set for scheduling. In this step, the purpose of selecting the subsequent storage volumes is to remove the storage volume that is suitable for the subsequent scheduling step, such as a target period storage volume, to improve the processing efficiency of the system.

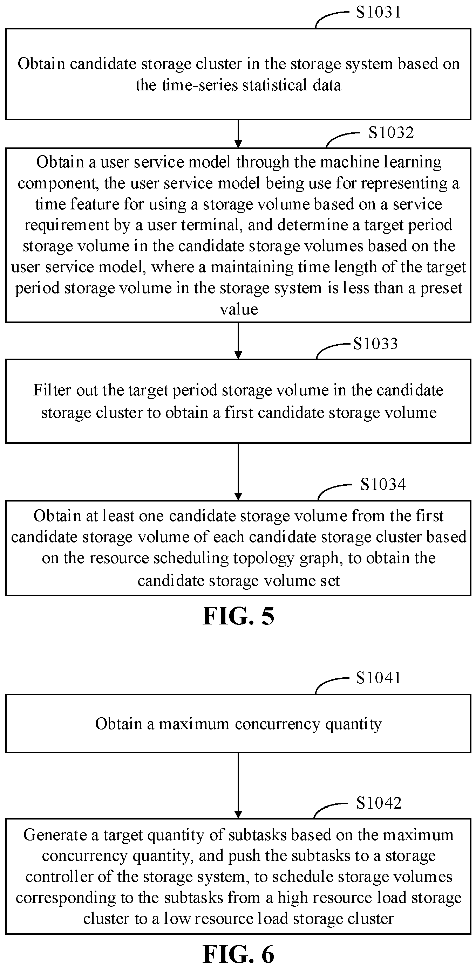

Further, as shown in FIG. 5, a specific implementation of step S103 includes the following steps.

At step S1031, a candidate storage cluster in the storage system is obtained based on the time-series statistical data.

At step S1032, a user service model is obtained through a machine learning component, and the user service model is use for representing a time feature for using a storage volume based on a service requirement by a user terminal; and a target period storage volume in candidate storage volumes is determined based on the user service model, and a maintaining time length of the target period storage volume in the storage system is less than a preset value.

At step S1033, the target period storage volume in the candidate storage clusters is filtered out to obtain a first candidate storage volume.

At step S1034, at least one candidate storage volume is obtained from the first candidate storage volume of each candidate storage cluster based on the resource scheduling topological graph, to obtain the candidate storage volume set.

Exemplarily, the candidate storage cluster in the storage system, i.e., a storage cluster which can be resource scheduled, is determined through the time-series statistical data, which will not be further elaborated. In a possible implementation, the machine learning component may further output the user service model. The user service model is used for representing a model of services deployed in the storage system. Based on the user service model, access and modification features of data correspondingly stored in the storage system can be determined. For example, based on the user service model, the corresponding data has the characteristic of a large data write volume between 19:00 and 22:00 every night. Thus, based on the user service model, a storage volume for storing data may be created at specific time and deleted within the specific time. Therefore, based on the user service model, the target period storage volume in the storage volumes can be determined. Afterwards, the target period storage volume is filtered out from the candidate storage cluster to eliminate the impact of the target period storage volume, thereby obtain the first candidate storage volume. Finally, the candidate storage volume set for scheduling is determined based on the first candidate storage volume in conjunction with resource scheduling topological data, thus achieving the purpose of avoiding interference of the target period storage volume and improving the effect of storage resource scheduling.

Further, the resource scheduling plan is generated based on the resource situation of each candidate storage volume in the candidate storage volume set. The resource situation can be obtained based on the time-series statistical data. For example, a resource situation can be historical change over time of a resource state of a storage volume in a storage cluster. The resource situation includes storage performance resource and storage capacity resource of the storage volume. The candidate storage volumes in the storage cluster can be scheduled through the resource scheduling plan. Exemplarily, the resource scheduling plan can achieve resource load balancing among at least two storage clusters in a composite dimension. Specifically, for example, after a storage volume in a high resource load storage cluster is scheduled through the resource scheduling plan, the load resource, in a plurality of dimensions, of the high resource load storage cluster can be balanced (i.e. load reduction), such as balancing load resource in two dimensions of the storage capacity resource and the storage performance resource. Compared with the solution in the prior art that the load balancing is only performed on the storage capacity resource, this solution can further improve the effect of resource load balancing and a speed of data read and write.

Further, how to implement the above technical concept, that is, how to obtain the resource scheduling plan that can achieve the effect of resource load balancing among at least two storage clusters in the composite dimension, is the key to implement this embodiment. In a possible implementation, the resource situations of the candidate storage volumes can be obtained based on the storage cluster list recorded in the time-series statistical data, and then the current resource state of each storage cluster can be detected. A storage cluster with a resource state that do not meet a threshold requirement, such as a storage cluster with a capacity less than a capacity threshold or a storage cluster with bandwidth less than a bandwidth threshold, is labeled as a high resource load storage cluster. Then, the storage clusters are sorted based on their resource states. A storage cluster with the most sufficient resource is used as a storage cluster with low resource load, and mapping is established between the above high resource load storage cluster and the low resource load storage cluster, thus generating the resource scheduling plan. The resource scheduling plan is used for randomly scheduling a candidate storage volume from a high resource load storage cluster to a low resource load storage cluster until the load balancing state in the composite dimension is achieved. For example, the capacity, bandwidth, and IOPS of the high resource load storage cluster all meet the corresponding threshold requirements.

Further, exemplarily, after the resource scheduling plan is generated, the performing of the scheduling task for the related storage volume is controlled based on the resource scheduling plan. Specifically, the corresponding scheduling task is generated through the resource scheduling plan. Then, based on a mapping relationship, represented by the scheduling task, between a high resource load storage cluster (e.g. a first storage cluster) and a low resource load storage cluster (e.g. a second storage cluster), storage volumes in the high resource load storage cluster are scheduled to achieve resource load balancing among at least two storage clusters in a composite dimension. In the process of scheduling the storage volume, the scheduling task can be performed in sequence based on a queue, and after each scheduling task is completed, the high resource load storage cluster and/or the low resource load storage cluster involved are evaluated. After a resource load balancing condition is satisfied, the scheduling ends.

Further, in a possible implementation, the resource scheduling plan includes at least one subtask for scheduling the storage volume. As shown in FIG. 6, a specific implementation of step S104 includes the following steps.

At step S1041, a maximum concurrency quantity is obtained.

At step S1042, a target quantity of subtasks are generated based on the maximum concurrency quantity, and the subtasks are pushed to a storage controller of the storage system, to schedule storage volumes corresponding to the subtasks from a high resource load storage cluster to a low resource load storage cluster.

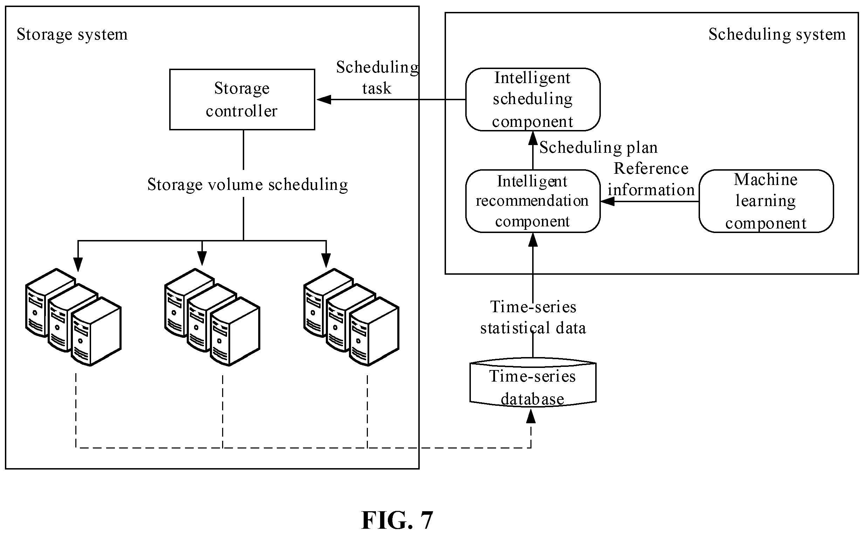

Exemplarily, the high resource load storage cluster is a first resource load storage cluster, and the low resource load storage cluster is a second resource load storage cluster. A resource load of the first resource load storage cluster is greater than a resource load of the second resource load storage cluster. Specifically, during the execution of the resource scheduling plan, a plurality of subtasks with a high workload of resource scheduling can be processed in parallel by a multithreading mode, thereby improving the scheduling efficiency. In a possible implementation, firstly, a maximum concurrency quantity for running in a scheduling system. The maximum concurrency quantity is pre-configured in the data management server. Later, the data management server generates a plurality of subtasks based on the maximum concurrency data, and pushes the subtasks to a storage controller of the storage system. The storage controller is used for implementing the scheduling of the storage volumes. FIG. 7 is an architecture diagram of a scheduling system according to an embodiment of the present disclosure. Referring to FIG. 7, a resource scheduler is run in the data management server, and a resource system is composed of an intelligent scheduling component, an intelligent recommendation component, and an artificial intelligence component. The intelligent recommendation component obtains time-series statistical data from a time-series database, uses the time-series statistical data and reference information (hereinafter referred to as first reference information) provided by the artificial intelligence component to make a decision, generates a resource scheduling plan, and transmits the resource scheduling plan to the intelligent scheduling component. The intelligent scheduling component generates a scheduling task and sends the scheduling task to a storage controller in a storage system. Afterwards, the storage controller executes the scheduling task to schedule storage volumes in storage clusters managed by the storage controller. A subtask describes mapping relationships among a group of storage clusters (two or more). In a case that the scheduling task is sent to the storage controller, a target quantity of subtasks are generated based on a maximum concurrency quantity, and the subtasks are pushed to the storage controller of the storage system. The target quantity is less than or equal to the maximum concurrency quantity. After receiving the subtasks, the storage controller schedules the storage volumes based on the mapping relationships among the storage clusters, described by the subtasks. Meanwhile, resource states corresponding to the storage clusters may be synchronously written to a time-series database to generate time-series statistical data. By setting the maximum concurrent quantity, the impact of a large number of resource scheduling plans on the storage service is avoided, and the system stability is improved.

In this embodiment, time-series statistical data of a storage system is obtained, and the time-series statistical data is used for representing a change over time of a plurality of resource states of a storage cluster in the storage system; whether resource scheduling needs to be triggered is determined based on the time-series statistical data; in response to determining that resource scheduling needs to be triggered, a resource scheduling topological graph is generated for the storage system, and candidate storage volume set for scheduling is selected from the storage cluster in the storage system based on the resource scheduling topological graph and the time-series statistical data, and the resource scheduling topological graph represents a resource quantity needing to be migrated in and a resource quantity needing to be migrated out for each storage cluster in the storage system; a resource scheduling plan is generated based on a resource situation of each candidate storage volume in the candidate storage volume set, and the resource scheduling plan is used for indicating a storage volume relationship among a plurality of storage clusters participating in scheduling; and a performing of a scheduling task for a related storage volume is controlled based on the resource scheduling plan. The corresponding resource scheduling plan is generated and executed through the time-series statistical data that represents the change of the resource states of the storage cluster, to realize resource load balancing among the storage clusters in multiple dimensions, and thus the problem of non-uniform resource allocation caused by scheduling resource load in a single dimension is avoided, and a speed of responding to a data request and a speed of data transmission of the storage system are increased.

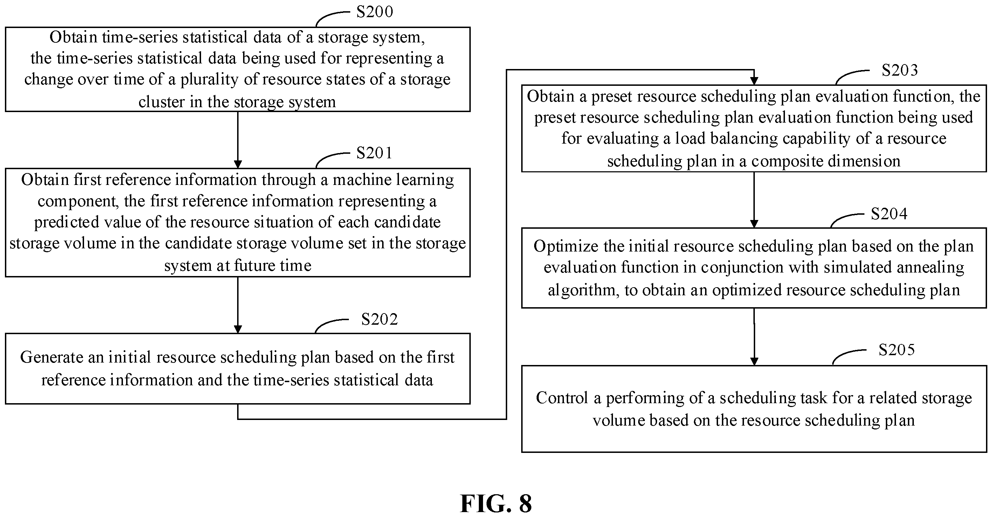

Referring to FIG. 8, FIG. 8 is a flowchart II of a cloud storage resource scheduling method according to an embodiment of the present disclosure. Based on the embodiment shown in FIG. 2, this embodiment further details the step S104. A resource situation of a candidate storage volume includes time-series statistical data. The time-series statistical data includes first time-series statistical data and second time-series statistical data; the first time-series statistical data represents a storage capacity resource of the storage cluster and/or a storage volume within the storage cluster; and the second time-series statistical data represents a storage performance resource of the storage cluster and/or the storage volume within the storage cluster. The cloud storage resource scheduling method includes the following steps.

At step S200, time-series statistical data of a storage system is obtained, and the time-series statistical data is used for representing a change over time of a plurality of resource states of a storage cluster in the storage system.

At step S201, first reference information is obtained through a machine learning component, and the first reference information represents a predicted value of a resource situation of each candidate storage volume in a candidate storage volume set in the storage system at future time.

At step S202, an initial resource scheduling plan is generated based on the first reference information and the time-series statistical data.

Exemplarily, referring to the architecture diagram of the scheduling system shown in FIG. 7, the machine learning component is further deployed in a data management server (a scheduling platform). The machine learning component is mainly responsible for predicting storage resource, identifying a user service model, and other functions; and transmitting information to an intelligent recommender for decision-making assistance. Specifically, the machine learning component can output the first reference information. The first reference information represents a predicted value of a resource state of the storage cluster in the storage system at future time, such as, a change in the resource state of the storage cluster within 24 hours. More specifically, for example, content of the first reference information represents: for storage cluster A, after 1 hour, a capacity resource is a TB, and an IOPS is b; and for storage cluster A, after 2 hours, a capacity resource is c TB, and an IOPS is d; and the like. Afterwards, an initial resource scheduling plan is generated based on the first reference information and the time-series statistical data. The initial resource scheduling plan can be a finally executed resource scheduling plan in the embodiment shown in FIG. 2. The initial resource scheduling plan records execution time of scheduling a high resource load storage cluster and a low resource load storage cluster. Since the first reference information can represent the predicted value of the resource state of the storage cluster in the storage system at the future time, the initial resource scheduling plan obtained based on the first reference information and the time-series statistical data that represents a current resource state is equivalent to having considered possible load change that may occur in the future, thereby avoiding the problem of storage resource shortage at time with a large number of accesses, thereby achieving tidal adjustment on storage resource, and improving the utilization efficiency of the storage resource.

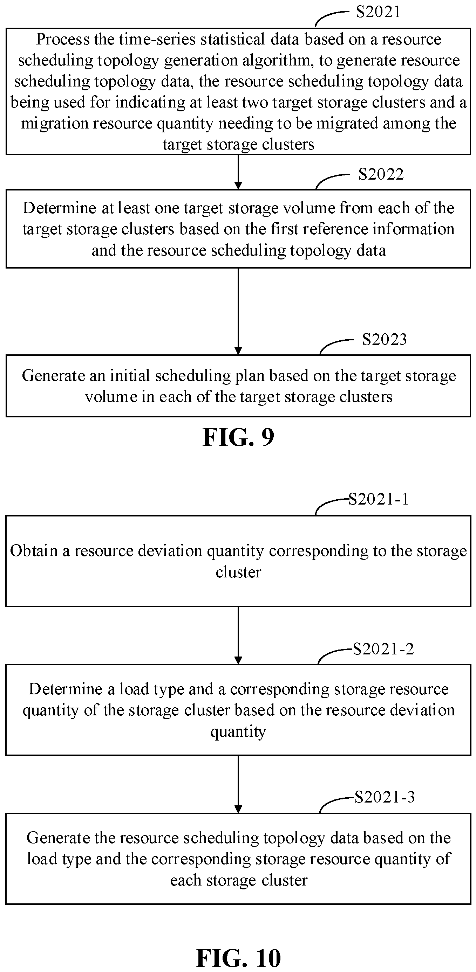

Further, exemplarily, as shown in FIG. 9, a specific implementation of step S202 includes the following steps.

At step S2021, the time-series statistical data is processed based on a resource scheduling topology generation algorithm, to generate resource scheduling topology data, and the resource scheduling topology data is used for indicating at least two target storage clusters and a migration resource quantity needing to be migrated among the target storage clusters.

At step S2022, at least one target storage volume is determined from each of the target storage clusters based on the first reference information and the resource scheduling topology data.

At step S2023, the resource scheduling plan is generated based on the target storage volume in each of the target storage clusters.

Exemplarily, first, the time-series statistical data is processed based on the resource scheduling topology generation algorithm to obtain the at least two target storage clusters and migration resource quantity needing to be migrated among the target storage clusters, i.e., the resource scheduling topology data. Specifically, during resource scheduling topology generation, a balancing determining algorithm is used to determine the resource deviation quantity of each cluster (i.e. a deviation between a target resource usage quantity and an actually used resource quantity of the storage cluster), thereby determining a target storage cluster that requires load balancing. The target storage cluster can include a high resource load storage cluster and a low resource load storage cluster which are paired. Afterwards, at least one target storage volume is determined based on a data volume of storage volumes in the target storage cluster, and an initial resource scheduling plan is generated.

Further, as shown in FIG. 10, a specific implementation of step S2021 includes the following steps.

At step S2021-1, a resource deviation quantity corresponding to the storage cluster is obtained.

At step S2021-2, a load type and a corresponding storage resource quantity of the storage cluster are determined based on the resource deviation quantity.

At step S2021-3, the resource scheduling topology data is generated based on the load type and the corresponding storage resource quantity of each storage cluster.

Exemplarily, in the process of generating the resource scheduling topology data, first, the resource deviation quantity corresponding to the storage cluster is obtained. The resource deviation quantity is the deviation between the target resource usage quantity and the actual resource usage quantity of the storage cluster. In the previous embodiments, the specific method of obtaining the resource deviation quantity has been introduced, and will not be elaborated here. Afterwards, the load type and the corresponding storage resource quantity are determined based on the resource deviation quantity. The load type only includes two categories of a high load type and a low load type, which are respectively used for indicating a high resource load storage cluster and a low resource load storage cluster. More detailed categories can also be used to indicate a resource load level of a storage cluster. Meanwhile, the corresponding storage resource quantity is obtained. The storage resource quantity can be determined based on the resource deviation quantity. In a specific implementation, the resource deviation quantity can be directly determined to be the storage resource quantity, i.e., resource quantity needing to be scheduled. Afterwards, the resource scheduling topology data can be generated based on the load type and the corresponding storage resource quantity of each above storage cluster.

At step S202A, a storage volume located in the high resource load storage cluster is scheduled into the low resource load storage cluster by executing the initial resource scheduling plan.

Exemplarily, after the initial resource scheduling plan is obtained, in a possible implementation, the storage volume can be directly scheduled based on the initial resource scheduling plan. The specific implementation can be found in the relevant introduction in the embodiment shown in FIG. 2, which will not be elaborated here. In another possible implementation, the initial resource scheduling plan can be further optimized to obtain an optimized resource scheduling plan with a better scheduling execution effect, thereby improving the resource scheduling effect.

At step S203, a preset resource scheduling plan evaluation function is obtained, and the preset resource scheduling plan evaluation function is used for evaluating a load balancing capability of a resource scheduling plan in a composite dimension.

At step S204, the initial resource scheduling plan is optimized based on the plan evaluation function in conjunction with simulated annealing algorithm, to obtain an optimized resource scheduling plan.

Exemplarily, first, the plan evaluation function for evaluating the load balancing capability of the resource scheduling plan in the composite dimension is obtained. Afterwards, based on the resource scheduling plan, the target storage volume specified in the initial resource scheduling plan is optimized using simulated annealing algorithm. Thus, a scheduling scheme with a better load balancing effect is obtained, i.e., the optimized resource scheduling plan is obtained.

A more specific embodiment is used to introduce the above process of generating the optimized resource scheduling plan. In this embodiment, an intelligent recommendation algorithm is provided to generate the optimized resource scheduling plan. An optimal batch of storage volumes need to be selected from the massive storage volumes of all the storage clusters based on a resource scheduling quantity defined in a resource scheduling topology, and are combined to obtain an optimized resource scheduling plan. The optimized resource scheduling plan needs to satisfy resource balance and reduce the impact of volume scheduling on users and the target storage clusters. Specifically, firstly, the procedure of the simulated annealing algorithm is as follows.

(1) Make a current temperature T=T0.

(2) Initialize a current solution to s=s0 and a score of the current solution to e=E(s).

(3) If T< $T_{end}$, close the algorithm.

(4) Obtain a new solution $s_{new}$ =neighbor(s) and a score of the new solution $e_{new}$=E ($s_{new}$ ), where a difference between the scores of the two solutions is $\Delta e = e_{new}$ - e.

(5) If $e^{\frac{\Delta e}{T}} > \mathrm{random}(0,1)$ > random(0,1), accept the new solution, s = $s_{new}$, e = $e_{new}$.

(5-1) If $\Delta e >0$, $e^{\Delta e/T}>1$. Therefore, a new solution with a high score will definitely be accepted.

(5-2) If $\Delta e <0$, $0<e^{\Delta e/T} <1$. There is a probability of accepting a new solution with a low score. This step can avoid obtaining a local optimal solution, so that an optimal solution can be searched for more extensively.

(6) T = r * T, turn to execute step (3).

T0 represents the initial temperature; $T_{end}$ represents a final temperature; T represents a current temperature; s0 represents the initial solution; s represents a current solution; r represents a temperature drop coefficient, less than 1; E(s) represents an evaluation function; and neighbor(s) represents generating a new solution based on the current solution.

In this embodiment, for a scenario of optimizing the resource scheduling plan, s represents the resource scheduling plan generated by the intelligent recommendation algorithm; E(s) represents a plan evaluation function; neighbor(s) represents generating a new resource scheduling plan (which can be an optimized resource scheduling plan) based on the current resource scheduling plan.

Based on the above simulated annealing algorithm procedure, after the initial resource scheduling plan is generated, the initial resource scheduling plan is adjusted based on a rule, for example, which includes: in response to the scheduling resource quantity of a storage cluster in the resource scheduling plan not meeting an expectation, a new storage volume is be added into the resource scheduling plan.

In response to the scheduling resource quantities in the resource scheduling plan all meeting the expectation, a storage volume is randomly selected from the plan and is attempted to be removed from the resource scheduling plan. Further, in response to the scheduling resource quantities of the storage cluster still meeting the expectation after deletion, the storage volume is directly removed from the plan. In response to the scheduling resource quantities of the storage cluster after deletion not meeting the expectation, a new storage volume needs to be selected from candidate scheduling volumes of the storage cluster to replace the deleted storage volume and is added into the resource scheduling plan. Afterwards, the storage volume is rated through the plan evaluation function.

Further, for the plan evaluation function, a function value of the plan evaluation function is determined based on at least one of the following evaluation indexes: a total scheduling resource quantity, a scheduling cost, and a performance stability.

Specifically, the total scheduling resource quantity is mainly used for calculating whether all the storage clusters meet the resource quantities calculated in the resource scheduling topology. In response to the storage clusters all meeting the resource quantities, the score is 1, otherwise, the score is a percentage of clusters which meet the resource quantities.

The scheduling cost is mainly evaluated based on a dimension such as capacities/performances of the storage volumes. Higher capacities and performances of the storage volumes indicate higher migration costs, and the score of this evaluation index is smaller. This score of the scheduling cost for each storage volume to be scheduled is calculated based on a historical capacity/bandwidth/IOPS of the storage volume (obtained from the time-series database), and future capacity/bandwidth/IOPS of the storage volume (obtained from a cluster learning component). The scores of scheduling cost of all the storage volumes in the resource scheduling plan are accumulated as a total score for the present resource scheduling plan.

The performance stability is mainly used for evaluating the impact on the future performance of the target storage cluster after executing the resource scheduling plan. In response to the impact being higher, the score is smaller. Specifically, for example, the bandwidth/IOPS performance trends of all the storage volumes in the next 24 hours are obtained from the machine learning component, and are averaged in unit of 1 hour, thus obtaining the average performance of the storage volumes within 24 time periods. Afterwards, for example, the bandwidth/IOPS performance trends of the target storage cluster in the next 24 hours are obtained from the machine learning component, and are also averaged in unit of 1 hour, thus obtaining the average performance of the storage cluster within 24 time periods. Afterwards, based on the resource scheduling plan, the bandwidths/IOPSs of the storage cluster in the next 24 hours after the storage volumes are scheduled to the target storage cluster are calculated, and a standard deviation of 24 time periods is calculated. The smaller the standard deviation indicates a more stable the performance after the resource scheduling, and a higher score for this index.

Finally, the above three evaluation indexes are weighted to obtain the corresponding total score, which is the function value of the evaluation function. Afterwards, the initial resource scheduling plan is optimized based on the function value of the evaluation function, and the optimized resource scheduling plan is finally obtained.

At step S205, a performing of a scheduling task for a related storage volume is controlled based on the resource scheduling plan.

In this embodiment, the implementations of step S200 and step S205 are the same as the implementations of step S101 and step S103 in the embodiment shown in FIG. 2 of this present disclosure, and will not be elaborated here.

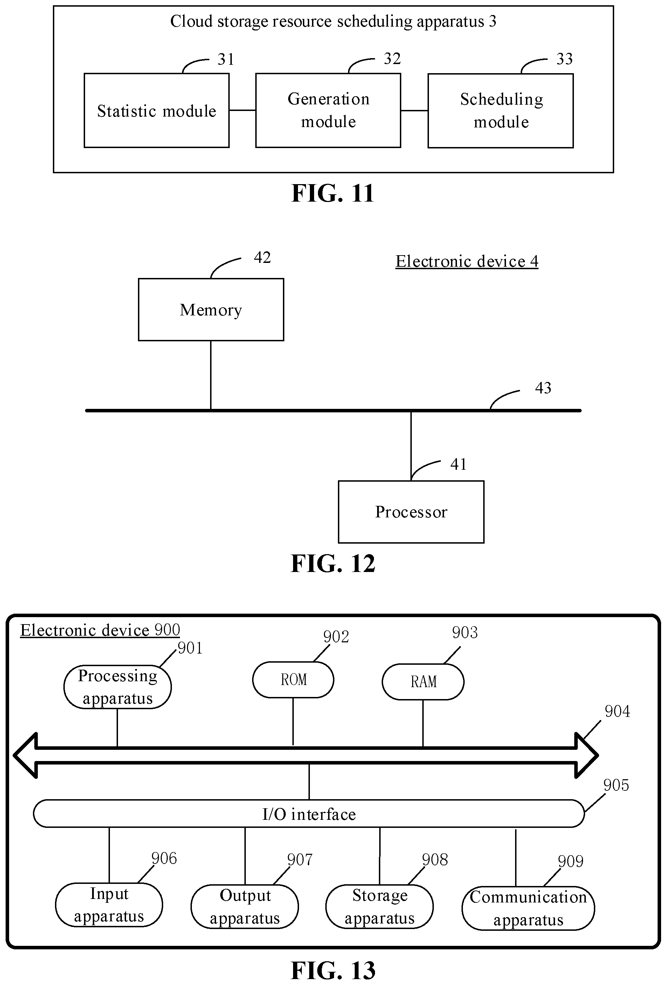

Corresponding to the cloud storage resource scheduling method of the above embodiment, FIG. 11 is a structural block diagram of a cloud storage resource scheduling apparatus according to an embodiment of the present disclosure. The method described in the above embodiment can be executed by the cloud storage resource scheduling apparatus. The apparatus can be implemented in software and/or hardware and integrated into an electronic device with a data processing function. The electronic device can include but is not limited to a mobile terminal with a big data processing capability, and a fixed terminal with a big data processing capability such as a desktop computer and a supercomputer.

For ease of explanation, only parts related to the embodiments of the present disclosure are shown. Referring to FIG. 11, the cloud storage resource scheduling apparatus 3 includes an obtaining module 31, a determining module 32, a filtering module 33, a generation module 34 and a scheduling module 35.

The obtaining module 31 is configured to obtain time-series statistical data of a storage system, and the time-series statistical data is used for representing a change over time of a plurality of resource states of a storage cluster in the storage system.

The determining module 32 is configured to determine, based on the time-series statistical data, whether resource scheduling needs to be triggered.

The filtering module 33 is configured to, in response to determining that resource scheduling needs to be triggered, generating a resource scheduling topological graph for the storage system, and selecting, from the storage cluster in the storage system, a candidate storage volume set for scheduling based on the resource scheduling topological graph and the time-series statistical data, and the resource scheduling topological graph represents a resource quantity needing to be migrated in and a resource quantity needing to be migrated out for each storage cluster in the storage system.

The generation module 34 is configured to generate a resource scheduling plan based on a resource situation of each candidate storage volume in the candidate storage volume set, and the resource scheduling plan is used for indicating a storage volume relationship among a plurality of storage clusters participating in scheduling.

The scheduling module 35 is configured to control a performing of a scheduling task for a related storage volume based on the resource scheduling plan.

According to one or more embodiments of the present disclosure, the time-series statistical data includes first time-series statistical data and second time-series statistical data. The first time-series statistical data represents a storage capacity resource of the storage cluster and/or a storage volume within the storage cluster, and the second time-series statistical data represents a storage performance resource of the storage cluster and/or the storage volume within the storage cluster.

According to one or more embodiments of the present disclosure, the first time-series statistical data includes at least one of a maximum assignable capacity and a historical capacity. The second time-series statistical data includes at least one of a bandwidth and an input/output per second.

According to one or more embodiments, the generation module 34 is specifically configured to: obtain a resource utilization rate corresponding to the storage cluster based on the time-series statistical data, and the resource utilization rate represents a ratio of an actually used resource quantity to a maximum available resource quantity of the storage cluster; generate a resource scheduling instruction based on the resource utilization rate corresponding to the storage cluster; and generate the resource scheduling plan in response to the resource scheduling instruction.

According to one or more embodiments, to generate the resource scheduling instruction based on the resource utilization rate corresponding to the storage cluster, the generation module 34 is specifically configured to: obtain a resource usage weight corresponding to the storage cluster; obtain a target resource usage quantity based on the resource usage weight of the storage cluster and the maximum available resource quantity of the storage cluster; and obtain a resource deviation quantity between the target resource usage quantity and the actually used resource quantity of the storage cluster, and generate the resource scheduling instruction in response to the resource deviation quantity being greater than a deviation quantity threshold.

According to one or more embodiments, to generate the resource scheduling plan based on the time-series statistical data, the generation module 34 is specifically configured to: obtain first reference information through a machine learning component, the first reference information representing a predicted value of the resource situation of each candidate storage volume in the candidate storage volume set in the storage system at future time; and generate the resource scheduling plan based on the first reference information and the time-series statistical data.

According to one or more embodiments, to generate the resource scheduling plan based on the first reference information and the time-series statistical data, the generation module 34 is specifically configured to: process the time-series statistical data based on a resource scheduling topology generation algorithm, to generate resource scheduling topology data, the resource scheduling topology data being used for indicating at least two target storage clusters and a migration resource quantity needing to be migrated among the target storage clusters; determine at least one target storage volume from each of the target storage clusters based on the first reference information and the resource scheduling topology data; and generate the resource scheduling plan based on the target storage volume in each of the target storage clusters.

According to one or more embodiments, to process the time-series statistical data based on the resource scheduling topology generation algorithm, to generate the resource scheduling topology data, the generation module 34 is specifically configured to: obtain a resource deviation quantity corresponding to the storage cluster; determine a load type and corresponding storage resource quantity of the storage cluster based on the resource deviation quantity; and generate the resource scheduling topology data based on the load type and the corresponding storage resource quantity of each storage cluster.

According to one or more embodiments, to determine the at least one target storage volume from each of the target storage clusters based on the first reference information and the resource scheduling topology data, the generation module 34 is specifically configured to: obtain candidate storage volumes from all storage volumes corresponding to the time-series statistical data, the candidate storage volumes being storage volumes with an available resource quantity greater than a preset value; obtain a user service model through the machine learning component, the user service model being use for representing a time feature for using a storage volume based on a service requirement by a user terminal, and determine a target period storage volume in the candidate storage volumes based on the user service model, wherein a maintaining time length of the target period storage volume in the storage system is less than a preset value; and determine the at least one target storage volume from the optimized candidate storage volumes of each of the target storage clusters based on the first reference information and the resource scheduling topology data.

According to one or more embodiments, to generate the resource scheduling plan based on the first reference information and the time-series statistical data, the generation module 34 is specifically configured to: generate an initial resource scheduling plan based on the first reference information and the time-series statistical data; obtain a preset resource scheduling plan evaluation function, the preset resource scheduling plan evaluation function being used for evaluating a load balancing capability of a resource scheduling plan in a composite dimension; and optimize the initial resource scheduling plan based on the plan evaluation function in conjunction with simulated annealing algorithm, to obtain the resource scheduling plan.

According to one or more embodiments, a function value of the plan evaluation function is determined based on at least one of the following evaluation indexes: a total scheduling resource quantity, a scheduling cost, and a performance stability.

According to one or more embodiments, the scheduling module 35 is specifically configured to: obtain a maximum concurrency quantity; generate a target quantity of subtasks, and push the subtasks to a storage controller of the storage system, to schedule storage volumes corresponding to the subtasks from a first resource load storage cluster to a second resource load storage cluster, wherein a resource load of the first resource load storage cluster is greater than a resource load of the second resource load storage cluster.

The obtaining module 31, the determining module 32, the filtering module 33, the generation module 34, and the scheduling module 35 are connected in sequence. The cloud storage resource scheduling apparatus 3 provided by this embodiment can be configured to implement the technical solutions of the method embodiments described above, and an implementation principle and technical effects thereof are similar to those of the method embodiments, so that the cloud storage resource scheduling apparatus will not be described in detail in this embodiment.

FIG. 12 is a schematic structural diagram of an electronic device according to an embodiment of the present disclosure. As shown in FIG. 12, the electronic device 4 includes a processor 41 and a memory 42 communicatively connected to the processor 41.

The memory 42 stores computer-executable instructions.

The processor 41 is configured to execute the computer-executable instructions stored in the memory 42 to implement the cloud storage resource scheduling method in the embodiments shown in FIG. 2 to FIG. 10.

Optionally, the processor 41 and the memory 42 are connected through a bus 43.

The relevant descriptions can be understood by referring to the corresponding related descriptions and effects of the steps in the embodiments corresponding to FIG. 2 to FIG. 10, which will not be elaborated here.

The embodiments of the present disclosure provide a computer-readable storage medium storing computer-executable instructions which, when executed by a processor, implement the cloud storage resource scheduling method according to any one of the above embodiments corresponding to FIG. 2 to FIG. 10 of the present disclosure.

The embodiments of the present disclosure provide a computer program product, including computer programs which, when run by a processor, implement the cloud storage resource scheduling method according to any one of the above embodiments corresponding to FIG. 2 to FIG. 10 of the present disclosure.

In order to achieve the above embodiments, the embodiments of the present disclosure further provide an electronic device.

Further, referring to FIG. 13, a schematic structural diagram of an electronic device 900 suitable for implementing the embodiments of the present disclosure is shown. The electronic device 900 can be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal); and a fixed terminal such as a digital TV and a desktop computer. The electronic device shown in FIG. 13 is merely an example, and shall not impose any limitation on the function and scope of use of the embodiments of the present disclosure.

As shown in FIG. 13, the electronic device 900 may include a processing apparatus (e.g., a central processing unit or a graphics processing unit) 901 that may perform a variety of appropriate actions and processing in accordance with a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to a bus 904.

Usually, following apparatuses can be connected to the I/O interface 905: an input apparatus 906 including a touch screen, a touchpad, a keyboard, a mouse, a camera, a microphone, an accelerometer, a gyroscope, and the like; an output apparatus 907 including a Liquid Crystal Display (LCD), a speaker, a vibrator, and the like; a storage apparatus 908 including a magnetic tape, a hard disk drive, and the like; and a communication apparatus 909. The communication apparatus 909 can allow the electronic device 900 to wirelessly or wiredly communicate with other devices to exchange data. Although FIG. 13 shows the electronic device 900 with multiple apparatuses, it should be understood that the electronic device 900 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer programs carried on a computer-readable medium, and the computer programs include program codes used for performing the methods shown in the flowcharts. In such an embodiment, the computer programs may be downloaded and installed from a network through the communication apparatus 909, or installed from the memory 908, or installed from the ROM 902. When the computer programs are executed by the processing apparatus 901, the above-mentioned functions defined in the methods of the embodiments of the present disclosure are executed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signal may be in various forms, including but not limited to an electromagnetic signal, an optical signal, or any suitable combination thereof. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

The computer-readable medium may be included in the electronic device or exist alone and is not assembled into the electronic device.

The above computer-readable medium carries one or more programs. When executed by the electronic device, the one or more programs cause the electronic device to implement the methods shown in the above embodiments.

Computer program codes for performing the operations of the present disclosure may be written in one or more programming languages or a combination thereof. The above programming languages include an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case that a remote computer is involved, the remote computer can be connected to a user computer through any kind of networks, including a LAN or a WAN, or can be connected to an external computer (e.g., through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units or modules described in the embodiments of the present disclosure can be implemented through software or hardware. The names of the units or modules do not constitute a limitation on the units in a situation.

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

In a first aspect, according to one or more embodiments of the present disclosure, a cloud storage resource scheduling method is provided, and the cloud storage resource scheduling method includes: obtaining time-series statistical data of a storage system, the time-series statistical data being used for representing a change over time of a plurality of resource states of a storage cluster in the storage system; generating a resource scheduling plan based on the time-series statistical data, the resource scheduling plan being used for achieving resource load balancing among at least two storage clusters in a composite dimension by scheduling storage volumes in the storage cluster; and scheduling a storage volume located in a high resource load storage cluster to a low resource load storage cluster by executing the resource scheduling plan.

According to one or more embodiments of the present disclosure, the time-series statistical data includes first time-series statistical data and second time-series statistical data. The first time-series statistical data represents a storage capacity resource of the storage cluster and/or a storage volume within the storage cluster, and the second time-series statistical data represents a storage performance resource of the storage cluster and/or the storage volume within the storage cluster.

According to one or more embodiments of the present disclosure, the first time-series statistical data includes at least one of a maximum assignable capacity and a historical capacity. The second time-series statistical data includes at least one of a bandwidth and an input/output per second.

According to one or more embodiments of the present disclosure, generating the resource scheduling plan based on the time-series statistical data comprises: obtaining a resource utilization rate corresponding to the storage cluster based on the time-series statistical data, the resource utilization rate representing a ratio of an actually used resource quantity to a maximum available resource quantity of the storage cluster; generating a resource scheduling instruction based on the resource utilization rate corresponding to the storage cluster; and generating the resource scheduling plan in response to the resource scheduling instruction.

According to one or more embodiments, generating the resource scheduling instruction based on the resource utilization rate corresponding to the storage cluster includes: obtaining a resource usage weight corresponding to the storage cluster; obtaining a target resource usage quantity based on the resource usage weight of the storage cluster and the maximum available resource quantity of the storage cluster; and obtaining a resource deviation quantity between the target resource usage quantity and the actually used resource quantity of the storage cluster, and generating the resource scheduling instruction in response to the resource deviation quantity being greater than a deviation quantity threshold.

According to one or more embodiments, generating the resource scheduling plan based on the time-series statistical data includes: obtaining first reference information through a machine learning component, the first reference information representing a predicted value of the resource situation of each candidate storage volume in the candidate storage volume set in the storage system at future time; and generating the resource scheduling plan based on the first reference information and the time-series statistical data.

According to one or more embodiments, generating the resource scheduling plan based on the first reference information and the time-series statistical data includes: processing the time-series statistical data based on a resource scheduling topology generation algorithm, to generating resource scheduling topology data, the resource scheduling topology data being used for indicating at least two target storage clusters and a migration resource quantity needing to be migrated among the target storage clusters; determining at least one target storage volume from each of the target storage clusters based on the first reference information and the resource scheduling topology data; and generating the resource scheduling plan based on the target storage volume in each of the target storage clusters.

According to one or more embodiments, processing the time-series statistical data based on the resource scheduling topology generation algorithm, to generate the resource scheduling topology data includes: obtaining a resource deviation quantity corresponding to the storage cluster; determining a load type and corresponding storage resource quantity of the storage cluster based on the resource deviation quantity; and generating the resource scheduling topology data based on the load type and the corresponding storage resource quantity of each storage cluster.

According to one or more embodiments, determining the at least one target storage volume from each of the target storage clusters based on the first reference information and the resource scheduling topology data includes: obtaining candidate storage volumes from all storage volumes corresponding to the time-series statistical data, the candidate storage volumes being storage volumes with an available resource quantity greater than a preset value; obtaining a user service model through the machine learning component, the user service model being use for representing a time feature for using a storage volume based on a service requirement by a user terminal, and determining a target period storage volume in the candidate storage volumes based on the user service model, wherein a maintaining time length of the target period storage volume in the storage system is less than a preset value; filtering out the target period storage volume in the candidate storage volumes to obtain optimized candidate storage volumes; determining the at least one target storage volume from the optimized candidate storage volumes of each of the target storage clusters based on the first reference information and the resource scheduling topology data.

According to one or more embodiments, generating the resource scheduling plan based on the first reference information and the time-series statistical data includes: generating an initial resource scheduling plan based on the first reference information and the time-series statistical data; obtaining a preset resource scheduling plan evaluation function, the preset resource scheduling plan evaluation function being used for evaluating a load balancing capability of a resource scheduling plan in a composite dimension; and optimizing the initial resource scheduling plan based on the plan evaluation function in conjunction with simulated annealing algorithm, to obtain the resource scheduling plan.

According to one or more embodiments, a function value of the plan evaluation function is determined based on at least one of the following evaluation indexes: a total scheduling resource quantity, a scheduling cost, and a performance stability.

According to one or more embodiments, scheduling the storage volume located in the high resource load storage cluster to the low resource load storage cluster by executing the resource scheduling plan includes: obtaining a maximum concurrency quantity; and generating a target quantity of subtasks based on the maximum concurrency quantity, and pushing the subtasks to a storage controller of the storage system, to schedule storage volumes corresponding to the subtasks from the high resource load storage cluster to the low resource load storage cluster.

In a second aspect, according to one or more embodiments of the present disclosure, a cloud storage resource scheduling apparatus is provided, and the cloud storage resource scheduling apparatus includes: a statistic module configured to obtain time-series statistical data of a storage system, the time-series statistical data being used for representing a change over time of a resource state of a storage cluster in the storage system; a generation module configured to generate a resource scheduling plan based on the time-series statistical data, the resource scheduling plan being used for achieving resource load balancing among at least two storage clusters in a composite dimension by scheduling a storage volume in the storage cluster; and a scheduling module, configured to schedule a storage volume located in a high resource load storage cluster to a low resource load storage cluster by executing the resource scheduling plan.

According to one or more embodiments of the present disclosure, the time-series statistical data includes first time-series statistical data and second time-series statistical data. The first time-series statistical data represents a storage capacity resource of the storage cluster and/or a storage volume within the storage cluster, and the second time-series statistical data represents a storage performance resource of the storage cluster and/or the storage volume within the storage cluster.

According to one or more embodiments of the present disclosure, the first time-series statistical data includes at least one of a maximum assignable capacity and a historical capacity. The second time-series statistical data includes at least one of a bandwidth and an input/output per second.

According to one or more embodiments, the generation module is specifically configured to: obtain a resource utilization rate corresponding to the storage cluster based on the time-series statistical data, the resource utilization rate representing a ratio of an actually used resource quantity to a maximum available resource quantity of the storage cluster; generate a resource scheduling instruction based on the resource utilization rate corresponding to the storage cluster; and generate the resource scheduling plan in response to the resource scheduling instruction.

According to one or more embodiments, to generate the resource scheduling instruction based on the resource utilization rate corresponding to the storage cluster, the generation module is specifically configured to: obtain a resource usage weight corresponding to the storage cluster; obtain a target resource usage quantity based on the resource usage weight of the storage cluster and the maximum available resource quantity of the storage cluster; and obtain a resource deviation quantity between the target resource usage quantity and the actually used resource quantity of the storage cluster, and generate the resource scheduling instruction in response to the resource deviation quantity being greater than a deviation quantity threshold.

According to one or more embodiments, to generate the resource scheduling plan based on the time-series statistical data, the generation module is specifically configured to: obtain first reference information through a machine learning component, the first reference information representing a predicted value of the resource situation of each candidate storage volume in the candidate storage volume set in the storage system at future time; and generate the resource scheduling plan based on the first reference information and the time-series statistical data.

According to one or more embodiments, to generate the resource scheduling plan based on the first reference information and the time-series statistical data, the generation module is specifically configured to: process the time-series statistical data based on a resource scheduling topology generation algorithm, to generate resource scheduling topology data, the resource scheduling topology data being used for indicating at least two target storage clusters and a migration resource quantity needing to be migrated among the target storage clusters; determine at least one target storage volume from each of the target storage clusters based on the first reference information and the resource scheduling topology data; and generate the resource scheduling plan based on the target storage volume in each of the target storage clusters.

According to one or more embodiments, to process the time-series statistical data based on the resource scheduling topology generation algorithm, to generate the resource scheduling topology data, the generation module is specifically configured to: obtain a resource deviation quantity corresponding to the storage cluster; determine a load type and corresponding storage resource quantity of the storage cluster based on the resource deviation quantity; and generate the resource scheduling topology data based on the load type and the corresponding storage resource quantity of each storage cluster.

According to one or more embodiments, to determine the at least one target storage volume from each of the target storage clusters based on the first reference information and the resource scheduling topology data, the generation module is specifically configured to: obtain candidate storage volumes from all storage volumes corresponding to the time-series statistical data, the candidate storage volumes being storage volumes with an available resource quantity greater than a preset value; obtain a user service model through the machine learning component, the user service model being use for representing a time feature for using a storage volume based on a service requirement by a user terminal, and determine a target period storage volume in the candidate storage volumes based on the user service model, wherein a maintaining time length of the target period storage volume in the storage system is less than a preset value; filter out the target period storage volume in the candidate storage volumes to obtain optimized candidate storage volumes; determine the at least one target storage volume from the optimized candidate storage volumes of each of the target storage clusters based on the first reference information and the resource scheduling topology data.

According to one or more embodiments, to generate the resource scheduling plan based on the first reference information and the time-series statistical data, the generation module is specifically configured to: generate an initial resource scheduling plan based on the first reference information and the time-series statistical data; obtain a preset resource scheduling plan evaluation function, the preset resource scheduling plan evaluation function being used for evaluating a load balancing capability of a resource scheduling plan in a composite dimension; and optimize the initial resource scheduling plan based on the plan evaluation function in conjunction with simulated annealing algorithm, to obtain the resource scheduling plan.

According to one or more embodiments, a function value of the plan evaluation function is determined based on at least one of the following evaluation indexes: a total scheduling resource quantity, a scheduling cost, and a performance stability.

According to one or more embodiments, the scheduling module is specifically configured to: obtain a maximum concurrency quantity; and generate a target quantity of subtasks based on the maximum concurrency quantity, and push the subtasks to a storage controller of the storage system, to schedule storage volumes corresponding to the subtasks from the high resource load storage cluster to the low resource load storage cluster.

In a third aspect, according to one or more embodiments of the present disclosure, an electronic device is provided, and the electronic device includes at least one processor and a memory. The memory stores computer-executable instructions; and the at least one processor is configured to execute the computer-executable instructions stored in the memory to cause the at least one processor to perform the cloud storage resource scheduling method in the first aspect and in various possible designs of the first aspect.

In a fourth aspect, according to one or more embodiments of the present disclosure, a computer-readable storage medium is provided. The computer-readable storage medium stores computer-executable instructions which, when executed by processor, implement the cloud storage resource scheduling method in the first aspect and in various possible designs of the first aspect.

In a fifth aspect, according to one or more embodiments of the present disclosure, a computer program product is provided, and the computer program product includes computer programs which, when run by a processor, implement the cloud storage resource scheduling method in the first aspect and in various possible designs of the first aspect.

The foregoing descriptions are merely preferred embodiments of the present disclosure and explanations of the applied technical principles. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A cloud storage resource scheduling method, comprising:

> obtaining (S101) time-series statistical data of a storage system, the time-series statistical data being used for representing a change over time of a plurality of resource states of a storage cluster in the storage system;
> determining (S102), based on the time-series statistical data, whether resource scheduling needs to be triggered;
> in response to determining that resource scheduling needs to be triggered, generating (S103) a resource scheduling topological graph for the storage system, and selecting, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system;
> generating (S104) a resource scheduling plan based on a resource situation of each candidate storage volume in the candidate storage volume set, the resource scheduling plan being used for indicating a storage volume relationship among a plurality of storage clusters participating in scheduling; and
> controlling (S105) a performing of a scheduling task for a related storage volume based on the resource scheduling plan.

2. The method according to claim 1, wherein determining (S102), based on the time-series statistical data, whether the resource scheduling needs to be triggered comprises:

> obtaining (S1021) a resource utilization rate corresponding to the storage cluster based on the time-series statistical data, the resource utilization rate representing a ratio of an actually used resource quantity to a maximum available resource quantity of the storage cluster; and
> generating (S1022) a resource scheduling instruction based on the resource utilization rate corresponding to the storage cluster, the resource scheduling instruction being used for triggering the resource scheduling.

3. The method according to claim 2, wherein generating (S1022) the resource scheduling instruction based on the resource utilization rate corresponding to the storage cluster comprises:

> obtaining (S1022-1) a resource usage weight corresponding to the storage cluster;
> obtaining (S1022-2) a target resource usage quantity based on the resource usage weight of the storage cluster and the maximum available resource quantity of the storage cluster; and
> obtaining (S1022-3) a resource deviation quantity between the target resource usage quantity and the actually used resource quantity of the storage cluster, and generating the resource scheduling instruction in response to the resource deviation quantity being greater than a deviation quantity threshold.

4. The method according to claim 1, wherein the resource situation comprises the time-series statistical data, and the time-series statistical data comprises first time-series statistical data and second time-series statistical data, wherein the first time-series statistical data represents a storage capacity resource of the storage cluster and/or a storage volume within the storage cluster, the second time-series statistical data represents a storage performance resource of the storage cluster and/or the storage volume within the storage cluster, and wherein generating **(S104)** the resource scheduling plan based on the resource situation of each candidate storage volume in the candidate storage volume set comprises:

> obtaining (S201) first reference information through a machine learning component, the first reference information representing a predicted value of the resource situation of each candidate storage volume in the candidate storage volume set in the storage system at future time; and generating the resource scheduling plan based on the first reference information and the time-series statistical data.

5. The method according to claim 4, wherein generating the resource scheduling plan based on the first reference information and the time-series statistical data comprises:

processing (S2021) the time-series statistical data based on a resource scheduling topology generation algorithm, to generate resource scheduling topology data, the resource scheduling topology data being used for indicating at least two target storage clusters and a migration resource quantity needing to be migrated among the target storage clusters; determining (S2022) at least one target storage volume from each of the target storage clusters based on the first reference information and the resource scheduling topology data; and generating the resource scheduling plan based on the target storage volume in each of the target storage clusters.

6. The method according to claim 5, wherein processing (S2021) the time-series statistical data based on the resource scheduling topology generation algorithm, to generate the resource scheduling topology data comprises:

obtaining (S2021-1) a resource deviation quantity corresponding to the storage cluster; determining (S2021-2) a load type and a corresponding storage resource quantity of the storage cluster based on the resource deviation quantity; and generating (S2021-3) the resource scheduling topology data based on the load type and the corresponding storage resource quantity of each storage cluster.

7. The method according to claim 5, wherein determining (S2022) the at least one target storage volume from each of the target storage clusters based on the first reference information and the resource scheduling topology data comprises:

obtaining candidate storage volumes from all storage volumes corresponding to the time-series statistical data, the candidate storage volumes being storage volumes with an available resource quantity greater than a preset value; obtaining a user service model through the machine learning component, the user service model being use for representing a time feature for using a storage volume based on a service requirement by a user terminal, and determining a target period storage volume in the candidate storage volumes based on the user service model, wherein a maintaining time length of the target period storage volume in the storage system is less than a preset value; filtering out the target period storage volume in the candidate storage volumes to obtain optimized candidate storage volumes; and determining the at least one target storage volume from the optimized candidate storage volumes of each of the target storage clusters based on the first reference information and the resource scheduling topology data.

8. The method according to claim 4, wherein generating the resource scheduling plan based on the first reference information and the time-series statistical data comprises:

generating (S202) an initial resource scheduling plan based on the first reference information and the time-series statistical data; obtaining (S203) a preset resource scheduling plan evaluation function, the resource scheduling plan evaluation function being used for evaluating a load balancing capability of a resource scheduling plan in a composite dimension; and optimizing (S204) the initial resource scheduling plan based on the plan evaluation function in conjunction with simulated annealing algorithm, to obtain the resource scheduling plan.

9. The method according to claim 1, wherein controlling (S105) the performing of the scheduling task for the related storage volume based on the resource scheduling plan comprises:

obtaining (S1041) a maximum concurrency quantity; generating (S1042) a target quantity of subtasks based on the maximum concurrency quantity, and pushing the subtasks to a storage controller of the storage system, to schedule storage volumes corresponding to the subtasks from a first resource load storage cluster to a second resource load storage cluster, wherein a resource load of the first resource load storage cluster is greater than a resource load of the second resource load storage cluster.

10. A cloud storage resource scheduling apparatus (3), comprising:

an obtaining module configured to obtain time-series statistical data of a storage system, the time-series statistical data being used for representing a change over time of a plurality of resource states of a storage cluster in the storage system;

a determining module configured to determine, based on the time-series statistical data, whether resource scheduling needs to be triggered;

a filtering module configured to, in response to determining that resource scheduling needs to be triggered, generate a resource scheduling topological graph for the storage system, and select, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system;

a generation module configured to generate a resource scheduling plan based on a resource situation of each candidate storage volume in the candidate storage volume set, the resource scheduling plan being used for indicating a storage volume relationship among a plurality of storage clusters participating in scheduling; and

a scheduling module configured to control a performing of a scheduling task for a related storage volume based on the resource scheduling plan.

11. An electronic device, comprising a processor and a memory, wherein

the memory stores computer-executable instructions; and
the processor is configured to execute the computer-executable instructions stored in the memory to cause the processor to perform the cloud storage resource scheduling method according to any one of claims 1 to 9.

12. A computer-readable storage medium storing computer-executable instructions which, when executed by a processor, implement the cloud storage resource scheduling method according to any one of claims 1 to 9.

13. A computer program product, comprising computer programs which, when run by a processor, implement the cloud storage resource scheduling method according to any one of claims 1 to 9.

**FIG. 1**

S101

Obtain time-series statistical data of a storage system, the time-series statistical data being used for representing a change over time of a plurality of resource states of a storage cluster in the storage system

S102

Determine, based on the time-series statistical data, whether resource scheduling needs to be triggered

S103

In response to determining that resource scheduling needs to be triggered, generate a resource scheduling topological graph for the storage system, and select, from the storage cluster in the storage system, a candidate storage volume set for scheduling based on the resource scheduling topological graph and the time-series statistical data, the resource scheduling topological graph representing a resource quantity needing to be migrated in and a resource quantity needing to be migrated out for each storage cluster in the storage system

S104

Generate a resource scheduling plan based on a resource situation of each candidate storage volume in the candidate storage volume set, the resource scheduling plan being used for indicating a storage volume relationship among a plurality of storage clusters participating in scheduling

S105

Control a performing of a scheduling task for a related storage volume based on the resource scheduling plan

**FIG. 2**

S1021

Obtain a resource utilization rate corresponding to the storage cluster based on the time-series statistical data, the resource utilization rate representing a ratio of an actually used resource quantity to a maximum available resource quantity of the storage cluster

S1022

Generate a resource scheduling instruction based on the resource utilization rate corresponding to the storage cluster

S1023

In response to the resource scheduling instruction, generate the resource scheduling plan

**FIG. 3**

S1022-1

Obtain a resource usage weight corresponding to the storage cluster

S1022-2

Obtain a target resource usage quantity based on the resource usage weight of the storage cluster and the maximum available resource quantity of the storage cluster

S1022-3

Obtain a resource deviation quantity between the target resource usage quantity and the actually used resource quantity of the storage cluster, and generate the resource scheduling instruction in response to the resource deviation quantity being greater than a deviation quantity threshold

**FIG. 4**

S1031

Obtain candidate storage cluster in the storage system based on the time-series statistical data

S1032

Obtain a user service model through the machine learning component, the user service model being use for representing a time feature for using a storage volume based on a service requirement by a user terminal, and determine a target period storage volume in the candidate storage volumes based on the user service model, where a maintaining time length of the target period storage volume in the storage system is less than a preset value

S1033

Filter out the target period storage volume in the candidate storage cluster to obtain a first candidate storage volume

S1034

Obtain at least one candidate storage volume from the first candidate storage volume of each candidate storage cluster based on the resource scheduling topology graph, to obtain the candidate storage volume set

**FIG. 5**

S1041

Obtain a maximum concurrency quantity

S1042

Generate a target quantity of subtasks based on the maximum concurrency quantity, and push the subtasks to a storage controller of the storage system, to schedule storage volumes corresponding to the subtasks from a high resource load storage cluster to a low resource load storage cluster

**FIG. 6**

**Storage system**

Storage controller

Scheduling task

Storage volume scheduling

**Scheduling system**

Intelligent scheduling component

Scheduling plan

Intelligent recommendation component

Reference information

Machine learning component

Time-series statistical data

Time-series database

**FIG. 7**

EP 4 672 002 A1

S200

Obtain time-series statistical data of a storage system, the time-series statistical data being used for representing a change over time of a plurality of resource states of a storage cluster in the storage system

↓

S201

Obtain first reference information through a machine learning component, the first reference information representing a predicted value of the resource situation of each candidate storage volume in the candidate storage volume set in the storage system at future time

↓

S202

Generate an initial resource scheduling plan based on the first reference information and the time-series statistical data

→

S203

Obtain a preset resource scheduling plan evaluation function, the preset resource scheduling plan evaluation function being used for evaluating a load balancing capability of a resource scheduling plan in a composite dimension

↓

S204

Optimize the initial resource scheduling plan based on the plan evaluation function in conjunction with simulated annealing algorithm, to obtain an optimized resource scheduling plan

↓

S205

Control a performing of a scheduling task for a related storage volume based on the resource scheduling plan

**FIG. 8**

S2021

Process the time-series statistical data based on a resource scheduling topology generation algorithm, to generate resource scheduling topology data, the resource scheduling topology data being used for indicating at least two target storage clusters and a migration resource quantity needing to be migrated among the target storage clusters

S2022

Determine at least one target storage volume from each of the target storage clusters based on the first reference information and the resource scheduling topology data

S2023

Generate an initial scheduling plan based on the target storage volume in each of the target storage clusters

**FIG. 9**

S2021-1

Obtain a resource deviation quantity corresponding to the storage cluster

S2021-2

Determine a load type and a corresponding storage resource quantity of the storage cluster based on the resource deviation quantity

S2021-3

Generate the resource scheduling topology data based on the load type and the corresponding storage resource quantity of each storage cluster

**FIG. 10**

Cloud storage resource scheduling apparatus 3

| Statistic module | Generation module | Scheduling module |
|---|---|---|
| 31 | 32 | 33 |

**FIG. 11**

Electronic device 4

Memory — 42

— 43

Processor — 41

**FIG. 12**

Electronic device 900

Processing apparatus 901   ROM 902   RAM 903

904

905

I/O interface

Input apparatus 906   Output apparatus 907   Storage apparatus 908   Communication apparatus 909

**FIG. 13**

| | Europäisches Patentamt<br>European Patent Office<br>Office européen des brevets | **EUROPEAN SEARCH REPORT** | **Application Number**<br>EP 25 16 7904 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/028935 A1 (SAHAY MANJUL [US] ET AL) 23 January 2020 (2020-01-23)<br>* paragraph [0030] - paragraph [0133]; claims 1-20; figures 1-9c * | 1-13 | INV.<br>G06F12/0868<br>G06F12/0871<br>G06F12/0873 |
| A | CN 117 135 054 A (CHINA TELECOM CO LTD) 28 November 2023 (2023-11-28)<br>* paragraph [0004] - paragraph [0282] * | 1-13 | |
| A | US 10 484 301 B1 (SHUKLA HIMANSHU [US] ET AL) 19 November 2019 (2019-11-19)<br>* column 4, line 26 - column 20, line 42; claims 1-20; figures 1-7b * | 1-13 | |
| A | CN 117 076 093 A (BEIJING LEXUN TECH CO LTD) 17 November 2023 (2023-11-17)<br>* paragraph [0026] - paragraph [0054] * | 1-13 | |
| A | CN 117 972 367 B (GUANGDONG QINZHI TECH RESEARCH INSTITUTE CO LTD) 18 June 2024 (2024-06-18)<br>* paragraph [0028] - paragraph [0154] * | 1-13 | TECHNICAL FIELDS SEARCHED (IPC)<br><br>G06F |

The present search report has been drawn up for all claims

| Place of search | Date of completion of the search | Examiner |
|---|---|---|
| The Hague | 25 August 2025 | Alvado Cárcel, Lucía |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 672 002 A1**

## ANNEX TO THE EUROPEAN SEARCH REPORT
## ON EUROPEAN PATENT APPLICATION NO.

EP 25 16 7904

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2025

| Patent document cited in search report | | Publication date | Patent family member(s) | Publication date |
|---|---|---|---|---|
| US 2020028935 | A1 | 23-01-2020 | NONE | |
| CN 117135054 | A | 28-11-2023 | NONE | |
| US 10484301 | B1 | 19-11-2019 | NONE | |
| CN 117076093 | A | 17-11-2023 | NONE | |
| CN 117972367 | B | 18-06-2024 | NONE | |

EPO FORM P0459

For more details about this annex : see Official Journal of the European Patent Office, No. 12/82